# EUROPEAN PATENT SPECIFICATION

(11) **EP 1 078 852 B1**
(45) Date of publication and mention of the grant of the patent: **26.10.2005**
(21) Application number: 00250284.7
(22) Date of filing: 26.08.2000
(51) Int. Cl.: B64D 11/06, B64D 11/00, B60N 2/46, B60R 11/02

(54) **Aircraft seat apparatus**
Flugzeugsitz
Siège pour avion

(30) Priority: 27.08.1999 JP 24109299
(43) Date of publication of application: 28.02.2001
(73) Proprietor: KOITO INDUSTRIES, LTD., Yokohama (JP)
(72) Inventor: Kitamoto, Mitsuo, Totsuka-ku, Yokohama (JP); Asami, Bungo, Totsuka-ku, Yokohama (JP); Johoji, Kazumaro, Totsuka-ku, Yokohama (JP); Koshimizu, Noriyuki, Totsuka-ku, Yokohama (JP); Onoma, Keiichi, Totsuka-ku, Yokohama (JP)
(74) Representative: Wenzel & Kalkoff

(56) References cited:
- EP-A- 0 773 134
- EP-A- 0 926 065
- DE-A- 3 719 105
- DE-A- 19 800 538
- PATENT ABSTRACTS OF JAPAN vol. 014, no. 450 (M-1030), 27 September 1990 (1990-09-27) -& JP 02 179567 A (SONY CORP), 12 July 1990 (1990-07-12)
- PATENT ABSTRACTS OF JAPAN vol. 016, no. 331 (M-1282), 20 July 1992 (1992-07-20) -& JP 04 095543 A (MAZDA MOTOR CORP), 27 March 1992 (1992-03-27)

## Description

### Background of the Invention

The present invention relates to a seat apparatus installed in a cabin of an aircraft.

As conventional seat apparatuses (to be referred to as seats as well hereinafter) installed in aircraft business- and first-class sections, reclining seats, the seat backs (backrests) of which can be largely inclined backward by increasing the back-and-forth seat space (seat pitch) to be larger than that of seats in the economy-class section, are generally used. In a business-class seat, its armrest conventionally has a wing, and equipment around the seat such as a table, earphone, TV monitor, and the like are stored in the wing such that they can be taken out and put back freely. In this case, in a multi-passenger seat for seating two passengers which is constituted by placing two seats side by side in the lateral direction, a table is drawably stored in the wing of the outer armrest, and the inner wing is formed wider than the outer wing and a TV monitor is drawably stored in it. A control panel with various types of control switches for operating driving units for the seat back and legrest, operating the TV monitor, a reading light, and the like, and switching channels is provided to the outer or inner armrest.

In this conventional seat apparatus, if the seat pitch is large, the seat back can be largely inclined backward from the almost upright normal state so the passenger can stretch his legs forward at full length. On the other hand, when the seat back is switched from the normal state to the reclining state, the TV monitor cannot be taken out from or put back in the wing easily, and the positions of the control buttons on the control panel are difficult to find, leading to poor operability.

If the seat pitch is large, when the passenger seated in this seat tries to take or put articles such as a magazine or small articles such as his personal belongings out from or back in a storage pocket formed on the rear side of the seat back of a seat in front of his, he cannot reach the storage pocket. Therefore, this passenger must bend himself forward largely, and the storage pocket cannot be used conveniently.

In order to allow the passenger to have spare room and to make him feel comfortable in a long-hour flight, it is preferable to decrease the width of the armrest and increase the width of the seat bottom. However, since the TV monitor and table are stored in the armrest, the width of the armrest cannot be decreased to be smaller than a predetermined size.

From document JP 02 179567, an aircraft seat apparatus is known comprising a seat with an inclinable seat back and an armrest with a wing provided to said seat, said armrest being provided with a console on an upper surface on a rear end side, and said console being disposed with seat peripheral equipment.

### Summary of the Invention

The present invention has been made to solve the conventional problems described above, and has as its object to provide an aircraft seat apparatus having a large seat pitch, with which a TV monitor and control panel can be operated easily even if the tilt angle of the seat back is increased, the number of storage sections is increased and the storage sections can be used more conveniently, and maintenance for the TV monitor and the like can be facilitated.

In order to achieve the above object, according to the present invention, there is provided an aircraft seat apparatus comprising a seat with an inclinable seat back, and an armrest with a wing provided to the seat, the armrest being provided with a console on an upper surface on a rear end side, and the console being disposed with seat peripheral equipment, said console being comprised of a front case provided to an upper surface of a rear end portion of said armrest, and a rear case detachably attached to a rear surface of said armrest and projecting backward from said armrest, said rear case having an interior, an upper portion of which forms a storage section for a TV monitor together with said front case, and said rear case having an interior, a lower portion of which forms a rear seat storage section.

### Brief Description of the Drawings

Fig. 1 is a perspective view of the outer appearance of an aircraft seat apparatus according to a first embodiment of the present invention;
Fig. 2 is a perspective view showing the outer appearance of this seat apparatus seen obliquely from the back;
Fig. 3 is a front view of this seat apparatus;
Fig. 4 is a plan view of this seat apparatus;
Fig. 5 is a rear view of this seat apparatus;
Fig. 6 is a side view of this seat apparatus;
Fig. 7 is a sectional view taken along the line VII - VII of Fig. 3;
Fig. 8 is a perspective view of the main part of an armrest;
Fig. 9 is a perspective view showing a seat back and partition plate;
Fig. 10 is a perspective view of the main part of a console;
Fig. 11 is a side view of a seat apparatus according to a second embodiment of the present invention;
Fig. 12 is a front view of an armrest and console;
Fig. 13 is a side view of a TV monitor and its slide unit;
Fig. 14 is a front view of the TV monitor and its slide unit;
Fig. 15 is a perspective view of a seat apparatus according to a third embodiment of the present invention seen from behind;
Fig. 16 is a perspective view of the main parts of an armrest and console;
Fig. 17 is a view of the seat apparatus;
Fig. 18 is a view of the armrest seen from the front;
Figs. 19A and 19B are views showing states wherein the TV monitor is stored and in use, respectively;
Fig. 20 is a view showing the connected end portions of a slide rail;
Figs. 21A and 21B are side and front views, respectively, of a lock mechanism; and
Fig. 22 is a front view showing a fourth embodiment in which the present invention is applied to a one-passenger seat for seating one passenger.

### Description of the Preferred Embodiments

The present invention will be described in detail by way of embodiments shown in the accompanying drawings.

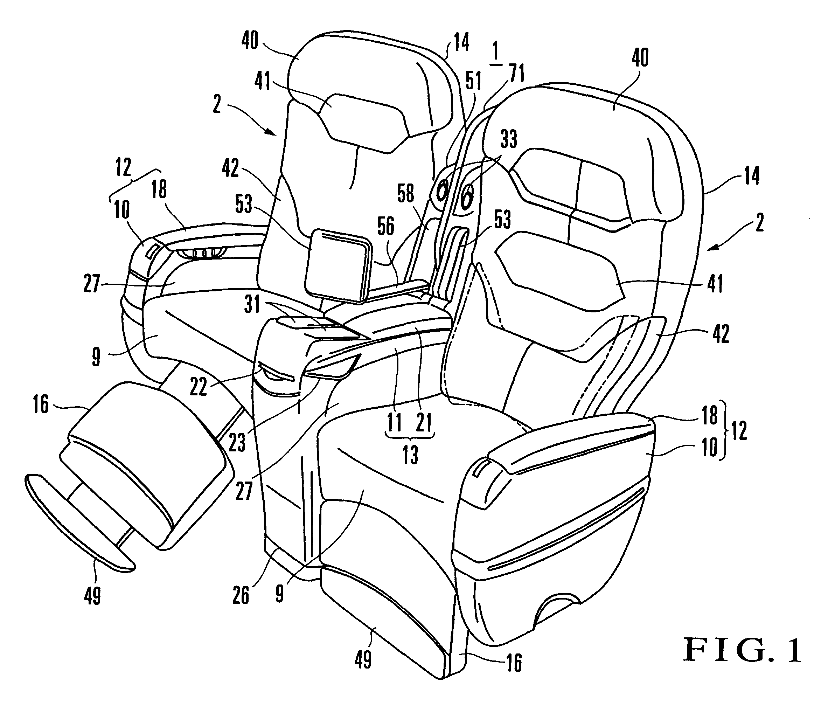

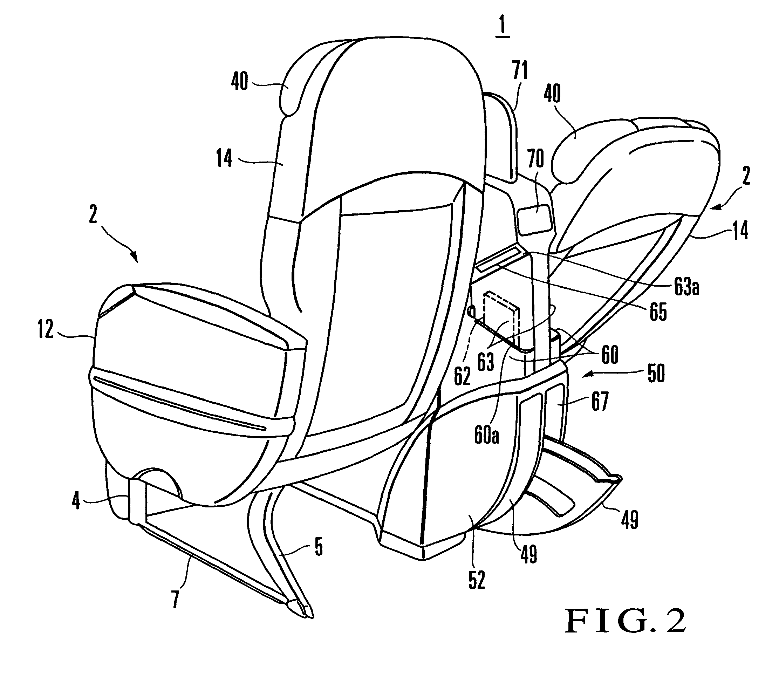

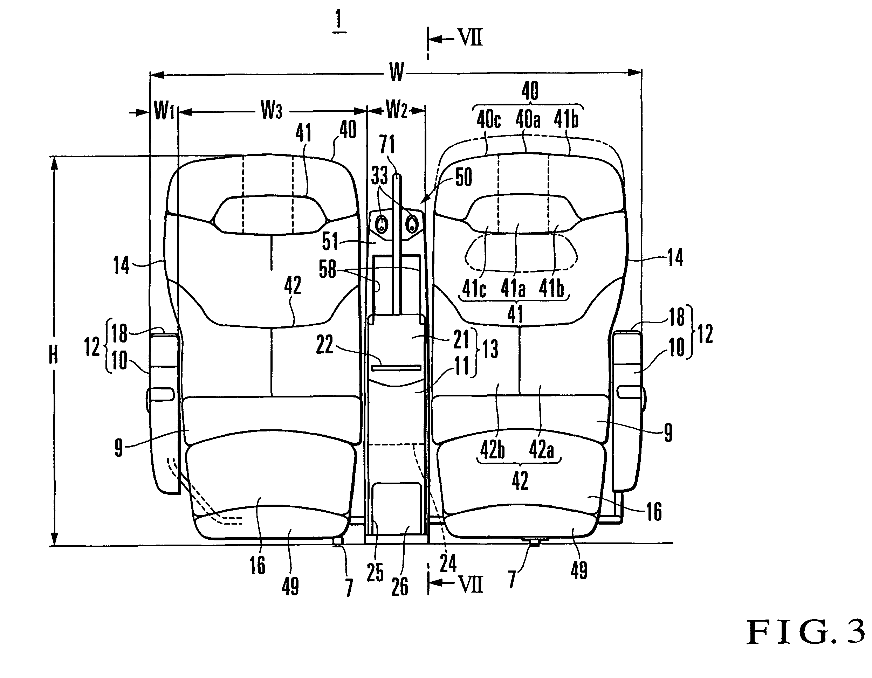

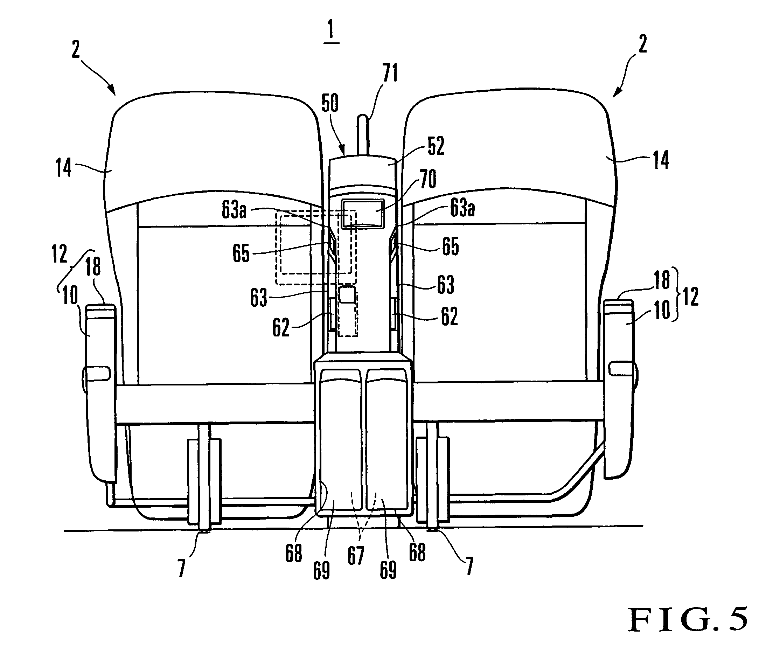

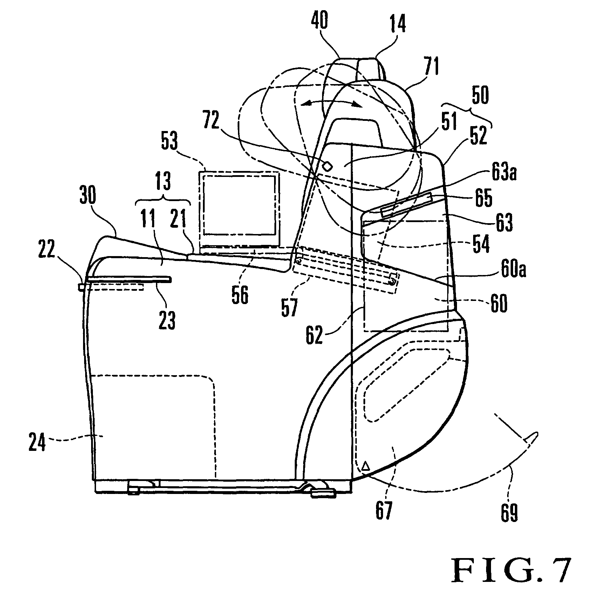

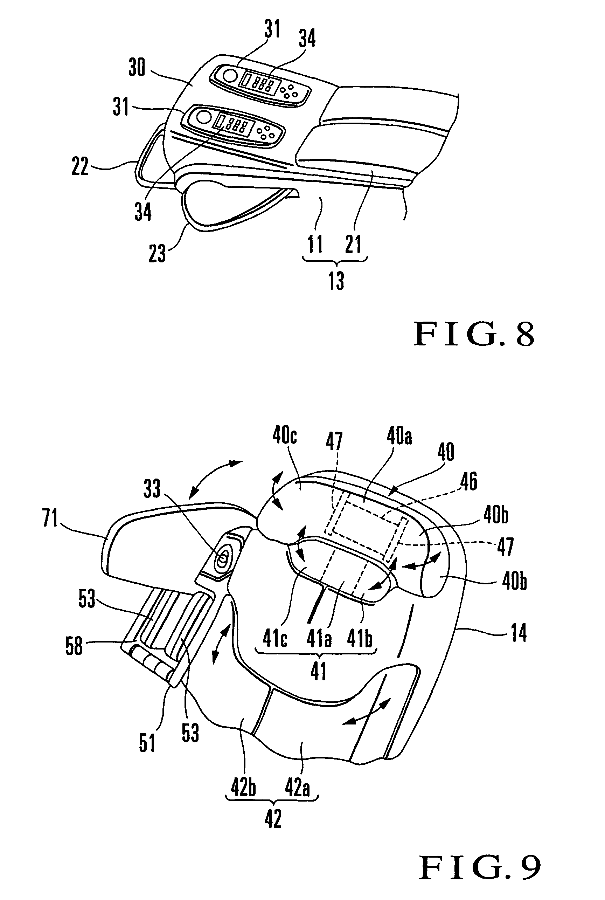

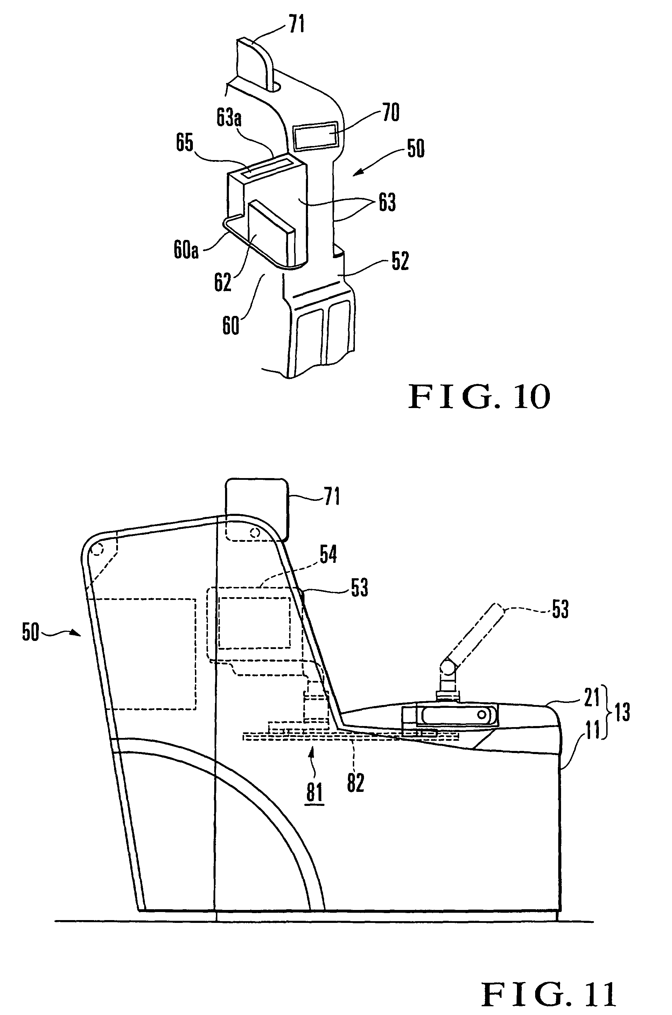

Fig. 1 shows the outer appearance of an aircraft seat apparatus according to the first embodiment of the present invention, Fig. 2 shows the outer appearance of this seat apparatus seen obliquely from the back, Figs. 3, 4, 5, and 6 show this seat apparatus, Fig. 7 shows a section taken along the line VII - VII of Fig. 3, Fig. 8 shows the main part of an armrest, Fig. 9 shows a seat back and partition plate, and Fig. 10 shows the main part of a console. In this embodiment, the present invention is applied to a two-passenger reclining seat developed for an aircraft business-class section.

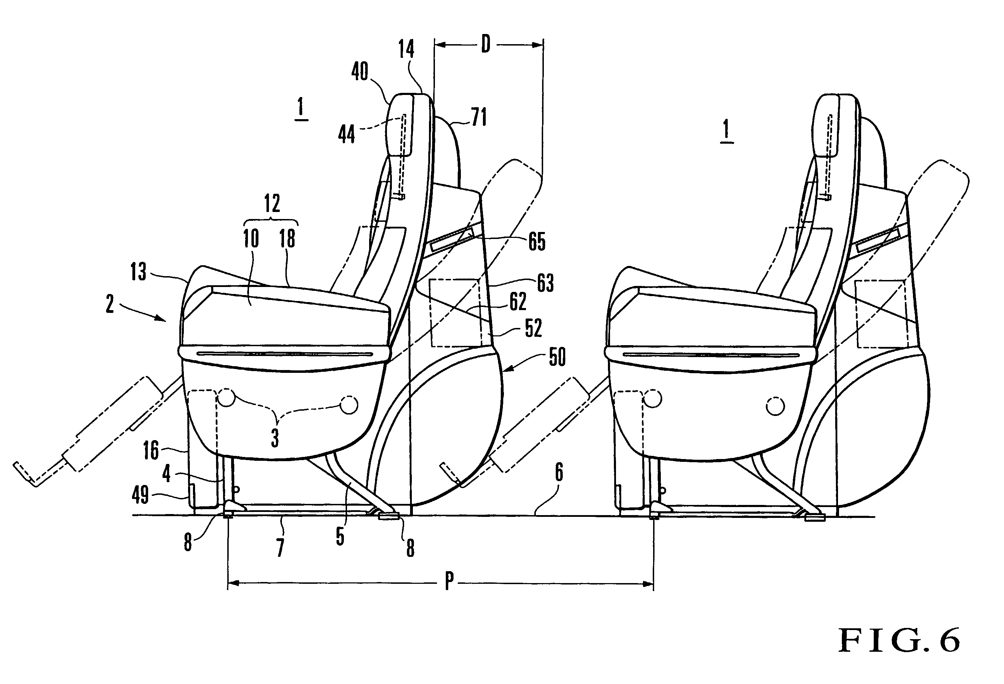

Referring to Figs. 1 to 10, a plurality of seat apparatuses 1 are disposed in the aircraft business-class section along the fuselage wall at a predetermined seat pitch P (Fig. 6) in the back-and-forth direction. In each seat apparatus 1, two seats 2 are arranged side by side in the lateral direction with front and rear pipes 3 (Fig. 6) to form a multi-passenger seat for seating two passengers. The two pipes 3 are supported by front legs 4 and rear legs 5. The front and rear legs 4 and 5 are detachably fixed to seat tracks 7 installed on the cabin floor surface 6 through attaching metal fixtures 8. Two parallel seat tracks 7 are installed under each seat apparatus 1 at a predetermined distance between them in the right-to-left direction. The right and left adjacent seats 2 respectively constitute reclining seats. In Fig. 1, both the right and left seats 2 are in the normal state. In Fig. 2, the left seat 2 is in the normal state, while the right seat 2 is in the reclining state wherein its seat back 14 is inclined backward through a predetermined angle.

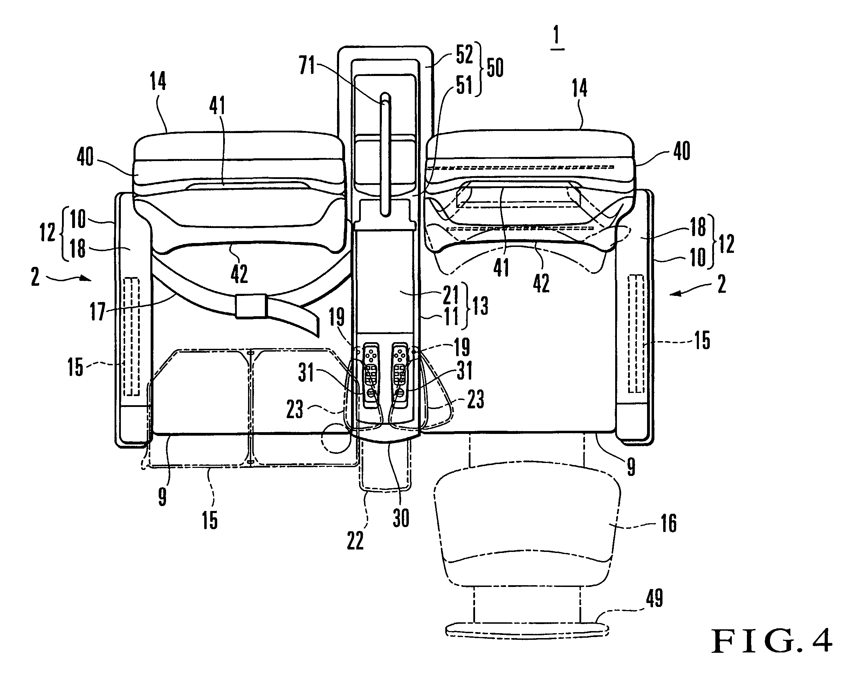

The arrangement and the like of each seat 2 will be described in detail. The seat 2 has the pipes 3 constituting a seat frame, a seat bottom 9, right and left armrests 13 and 12 with wings 11 and 10, the seat back 14 which can be inclined freely, a table 15 (Fig. 4), a legrest 16, and driving units (not shown) disposed under the seat bottom 9 to pivot the seat back 14 and legrest 16 in the back-and-forth direction, and the like. In Figs. 3 and 6, the height H of the seat apparatus 1 is 1,143 mm, the width W thereof is 1,371.6 mm, the width W₁ of the outer armrest 12 is 76.2 mm, the width W₂ of the inner armrest 13 is 177.8 mm, the distance W₃ between the right and left armrests 13 and 12 is 520.7 mm, and the seat pitch P of the front and rear seat apparatuses 1 is approximately 1,270 mm.

The seat bottom 9 has a seat belt 17 (Fig. 4) and is fixed to the seat frame.

The outer armrest 12 has the wing 10 constituted by a longitudinally elongated box with an open upper surface, and an arm cap 18 openable in the right-to-left direction to cover the upper surface opening of the wing 10. The wing 10 is fixed to the seat frame. The table 15 is drawably stored in the wing 10. The table 15 can be folded half at its center in the widthwise direction. When the table 15 is drawn out from the wing 10 to serve for use, it is opened as indicated by an alternate long and two short dashed line in Fig. 4, and its two end portions are supported by the upper surfaces of the distal end portions of the right and left armrests 13 and 12.

The inner armrest 13 is comprised of the wing 11 constituting a longitudinally elongated box in the same manner as in the outer armrest 12, and an arm cap 21 covering the upper surface of the wing 11. Since the inner armrest 13 is shared by the passengers seated on the two adjacent seats 2, its width W₂ is larger than that of the outer armrest 12. A cocktail tray 22 and cocktail tray 23 are stored in the upper portion of the front surface and the two side surfaces of the front end portions, respectively, of the wing 11. These cocktail trays 22 and 23 (Figs. 4 and 7) are used in place of the table 15 described above, and serve to place a small bottle, snacks, a paper cup, small articles, and the like on them. The cocktail tray 22 on the front surface side is attached to the wing 11 to be drawable back and forth. The cocktail tray 23 on each side surface side has a triangular shape, and its rear end side vertex is pivotally, axially supported by a shaft pin 19 (Fig. 4), so that it can be drawn aside the wing 11.

In the wing 11, a lower space on the front side forms a storage section 24 (Figs. 3 and 7) for a life vest which is to be put on for emergency evacuation. The storage section 24 has an opening 25 which opens to the front surface of the wing 11. The opening 25 is usually closed with a door 26. A relief (recess) 27 for relieving the knee of the seated passenger is formed in each side surface of the wing 11 to extend from the upper surface of the seat bottom 9 to the arm cap 21. With this relief 27, the width of a portion of the wing 11 against which the seated passenger's knee abuts decreases. Therefore, the distance between the wings of the right and left armrests 13 and 12 substantially increases without increasing the width W of the seat apparatuses 1, and the seated passenger can have spare room and feel comfortable. The relief 27 can be formed by storing a TV monitor 53 not in the wing 11 but in a console 50 to be described later.

The upper surface of the front end portion of the arm cap 21 forms a tilt surface 30 inclined upward in the forward direction to be gradually high toward the distal end, as shown in Fig. 8, and two control panels 31 are attached to the tilt surface 30 to serve for the respective seated passengers. Each control panel 31 has various types of operation buttons 34 for operating the driving units for the seat back 14 and legrest 16, adjusting the volumes of the earphone and the TV monitor 53, switching the channels, and turning on/off a reading light 33 (Fig. 9) and the like. The upper surface of the front end portion of the arm cap 21, to which the control panels 31 are attached, is formed into the tilt surface 30 inclined to be high forward because, even when the seat back 14 is inclined from the almost upright normal state to the reclining position and the seated passenger lies back at full length, the seated passenger can easily recognize and operate the various types of operation buttons 34.

The lower end of the seat back 14 is pivotally connected to the seat frame. When the seat back 14 is to be switched from the normal state to the reclining state, it is inclined backward through a predetermined angle by the seat back driving unit (not shown) disposed under the seat bottom 9. The maximum inclination angle of the seat back 14 is approximately 30°, and a maximum backward moving distance D (Fig. 6) of the seat back 14 is approximately 330 mm.

Referring to Figs. 1, 3, and 9, a headrest 40, neckrest 41, and side support 42 are formed on the front surface of the seat back 14 downward in this order. The headrest 40 is vertically movable, and its height can be adjusted in accordance with the position of the back of the seated passenger's head. The headrest 40 is comprised of three portions 40a, 40b, and 40c divided in the right-to-left direction, and the central portion 40a is attached to the seat back 14 to be vertically movable. The left and right end portions 40b and 40c constitute ear supports as they are openably connected such that they can come close to each other with respect to the central portion 40a to decrease the distance between them, and can be separated from each other to increase the distance between them. Hence, the supports 40b and 40c appropriately support not only the back of the head but also ears and side head portions of the seated passenger.

The movement of the headrest 40 in the direction of height is adjusted by sliding the central portion 40a along a guide rail 44 (Fig. 6) formed on the seat back 14. The ear supports 40b and 40c can be opened/closed when pivot shafts 47 provided to the ear supports 40b and 40c are pivotally fitted in guide holes formed in a frame 46 (Fig. 9) of the central portion 40a. A frictional force between the ear supports 40b and 40c can be adjusted by adjusting the fastening forces of adjusting screws, and is set to be equal or more than a value with which the ear supports 40b and 40c are not pivoted by a reaction generated when they support the ears of the seated passenger but their open angle can be maintained. In this case, if the whole headrest 40 is formed such that it can be further inclined in the back-and-forth direction, while the seated passenger is in the reclining posture, the headrest 40 can support his head in the upright state. Thus, the seated passenger can watch TV by the TV monitor 53 or read a book in a comfortable posture.

Referring to Fig. 9, the neckrest 41 is also vertically movable in the same manner as the headrest 40, and its height can be adjusted in accordance with the position of the head of the seated passenger. The neckrest 41 is comprised of three portions 41a, 41b, and 41c divided in the right-to-left direction, of which the central portion 41a is slidably attached to the guide rail 44. The two end portions 41b and 41c are openably supported such that they can come close to each other with respect to the central portion 41a to decrease the distance between their two ends and can be separated from eath other to increase the distance between their two ends. Therefore, the neckrest 41 can appropriately support not only the back but also the side surfaces of the neck of the seated passenger.

The side support 42 supports the seated passenger ranging from the lumbar vertebra to the back, and is comprised of a pair of right and left support bodies 42b and 42a. The support bodies 42a and 42b are formed to be openable about their inner end sides that are in contact with each other as the pivot center, that is, such that they can come close to each other to decrease the distance between their two ends and can be separated from each other to increase the distance between their two ends. When the support bodies 42a and 42b come close to each other as indicated by an alternate long and two short dashed line in Fig. 4 to decrease the distance between their two ends, thereby supporting the seated passenger's waist, for example, when the fuselage rolls, the seated passenger does not feel uncomfortable. Therefore, the side support 42 is suitably used particularly for a child or slim passenger.

The neckrest 41 and side support 42 can be used as a child seat. More specifically, all conventional aircraft seat apparatuses are designed to match adults' bodies. If a child is seated in the conventional aircraft seat apparatus, its head position is lower than the headrest 40, and the width of the seat back 14 itself is excessively large, so this seat apparatus is not stable and comfortable for the child to sit on. With the neckrest 41 and side support 42, the neckrest 41 may be lowered and the side support 42 may be closed in accordance with the position of the child's neck. Then, even an infant or a child of 5 to 6 years old can be seated or laid on the seat apparatus stably. An exclusive child seat need not be prepared.

Referring to Figs. 1, 3, 4, and 6, the legrest 16 is attached under the front end portion of the seat bottom 9. The legrest 16 has an extendable footrest 49 at its distal end, and is usually stored under the seat bottom 9 as it hangs downward. When the seat back 14 is to be switched from the normal state to the reclining state, the legrest 16 is pivoted forward by the legrest driving unit (not shown) provided under the seat bottom 9 through a predetermined angle. In this case, the footrest 49 is automatically extended.

Referring to Fig. 7, the console 50 characterizes the present invention, and is comprised of a front case 51 set on the upper surface of the rear end portion of the inner armrest 13 to be located between the seat backs 14 of the right and left seats 2, and a rear case 52 detachably attached to the rear surface of the armrest 13 and projecting from the armrest 13 upward and backward. The front case 51 projects from the upper surface of the rear end portion of the wing 11 of the armrest 13. The front case 51 has an open rear surface, and its interior forms a storage section 54 for the TV monitor 53 together with the upper space of the interior of the rear case 52. The storage section 54 has a width and depth sufficient for storing two TV monitors 53. The rear case 52 has an open front surface and covers the opening in the rear surface of the front case 51 and the rear surface of the armrest 13.

Each TV monitor 53 is set on a support base 56 to be pivotal through an articulated joint, and is drawably stored in the storage section 54 together with the support base 56. The support base 56 has rollers which move along a pair of right and left guide rails 57 formed along the inner side surfaces of the front and rear cases 51 and 52. When the TV monitor is to be in use, the support base 56 is drawn forward through an opening 58 (Fig. 9) formed in the front surface of the front case 51. The guide rails 57 are inclined to be low backward such that its rear end side is slightly lower than its front end side, as shown in Fig. 7. When the guide rails 57 are inclined in this manner, the TV monitor 53 can be prevented from popping out forward from the storage section 54 due to vibration, impact, and the like. The support base 56 is drawn out from the storage section 54 obliquely upward. After it is drawn out by the maximum stroke, the support base 56 pivots downward about its rear end as the center due to its own weight, and then the lower surface on its front end side abuts against the upper surface of the armrest 13, so that the support base 56 is supported substantially horizontally. The reading light 33 is attached to the front surface of the front case 51.

The rear case 52 has a width substantially equal to that of the rear end of the armrest 13, and has an upper half with a rectangular shape when seen from the side surface and a lower half with a substantial 1/4 arcuate shape when seen from the side surface. A magazine pocket 60 and recess 63 (Figs. 2 and 10) are formed in each side surface of the upper half of the rear case 52 to communicate with each other. An opening 60a of the magazine pocket 60 is open to the bottom surface of the recess 63. The opening 60a is inclined to be low backward. The recess 63 is formed to allow the passenger to take a magazine 62 out from and put it back in the magazine pocket 60 easily. The recess 63 is open to the rear surface of the rear case 52, and its side surface forms a trapezoid fallen sideways. Thus, an upper wall 63a of the recess 63 is inclined to be low forward, in the opposite manner to the opening 60a described above. A light 65 for illuminating the magazine pocket 60 and the feet of the seated passenger is attached to the upper wall 63a.

The inner space of the lower half of the rear case 52 is partitioned into right and left storage sections 67 (Figs. 2, 5, and 7). Each storage section 67 is used for the passenger seated on the rear sheet to store his baggage such as a bag. The storage section 67 has an opening 68 in the convex arcuate lower end portion of the rear surface of the rear case 52, and this opening 68 is usually closed with a lid 69 with a pocket. The lower end of the lid 69 is pivotally axially attached to the rear case 52. A monitor 70 comprised of an LED, an LCD, and the like is attached to the upper portion of the rear surface of the rear case 52 to indicate that this seat is a non-smoking seat or that the seat belt must be fastened.

A partition plate 71 is provided to the center of the upper surface of the console 50. As shown in Fig. 7, the partition plate 71 is pivotally, axially supported, at its intermediate portion in the direction of height which is close to the front end, by a horizontal support shaft 72. Usually, the partition plate 71 is held in the almost upright state as indicated by a solid line in Fig. 7 so that its upper end portion projects upward from the console 50. When the partition plate 71 is to be used, it is pivoted forward through almost 90° to be fallen sideways, so that its upper end portion projects forward from the front case 51 to partition the space in front of and between the adjacent seat backs 14. In this use state, even if the passenger faces the armrest 13 to watch TV by the TV monitor 53, he will not see the adjacent passenger, and his private space can be assured.

In the seat apparatus 1 with this structure, when the passenger draws the TV monitor 53 out from the console 50 together with the support base 56 and rotates it toward himself, he can set it on the armrest 13 on the front side of the control panel 31. Then, by operating the various types of operation buttons 34 on the control panel 31, the passenger can enjoy a program of a desired channel. Therefore, the TV monitor 53 need not be stored in the wing 11, and the relief 27 can be formed in the side surface of the wing 11. Consequently, the width of the seat bottom 9 can be increased, giving spare room to the seated passenger and making him feel comfortable.

In the conventional seat apparatus in which a TV monitor is stored in a wing 11, an arm cap 21 must be opened and the TV monitor must be drawn out upward by pivoting it, leading to a difficulty in operation of taking/putting the TV monitor out from and back in the reclining posture. If the TV monitor 53 is drawably stored in the storage section 54 in accordance with the slide method as in the present invention, the passenger can easily take and put the TV monitor 53 out from and back in the storage section 54 easily even in the reclining posture, thus facilitating handling of the TV monitor 53. When the TV monitor 53 is slid back and forth, the position of the TV monitor 53 to match the passenger's eyes can be easily adjusted in accordance with the preference of the passenger.

When the TV monitor 53 is to be stored in the wing 11, its size is limited by the size of the wing 11. When the TV monitor 53 is to be stored in the console 50, it can be formed large without being limited by the size of the wing 11. Therefore, a large-size TV monitor can be installed.

Also, since the TV monitor 53 is set on the armrest 13 on the front side of the control panel 31, even when the table 15 is drawn out from the armrest 12, it does not interfere with the TV monitor 53. Since the front end portion of the upper surface of the armrest 13 forms the tilt surface 30 and the control panel 31 is attached to the tilt surface 30, the angle of intersection formed by the passenger's eyes and panel surface is large. Even in the reclining posture, the passenger can correctly identify the positions of the buttons on the panel surface without raising his head. Accordingly, the passenger can operate the control panel 31 easily.

The console 50 is comprised of the front and rear cases 51 and 52 and the rear case 52 is detachably attached to the rear surface of the armrest 13 with screws. When the rear case 52 is removed, the TV monitor 53 stored in the storage section 54 is partly exposed backward from the front case 51. When compared to a case wherein the TV monitor 53 is incorporated in the wing 11, the TV monitor 53 can be attached, exchanged, and maintained easily, and cables of the TV monitor 53 can be arranged and connected easily.

The console 50 is arranged between the adjacent seats 2. Therefore, the presence of the console 50 does not largely interfere with the adjacent passengers and furthermore the passengers seated on the rear seats, so that the storage space can be enlarged. In particular, the rear case 52 projects backward from the armrest 13, and the magazine pockets 60 and storage sections 67 are formed in the rear case 52. Therefore, even if the seat pitch P is large, the passengers can easily take and put magazines and personal belongings out from and back in the magazine pockets 60 and storage sections 67 easily.

Regarding the seats on the front row, if only the rear case 52 is fixed to the fuselage wall surface in front of them, magazine pockets 60 and storage sections 67 can be provided also to the passengers seated on the seats of the front row.

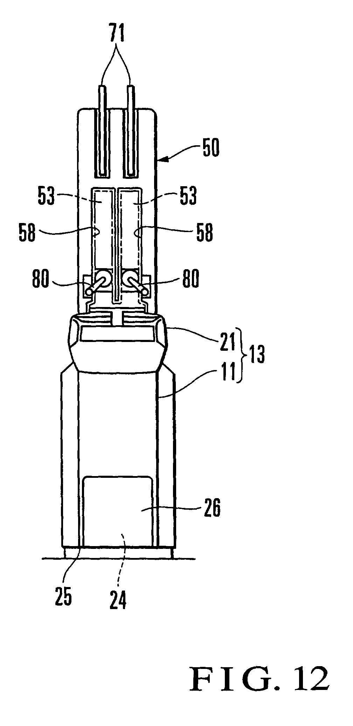

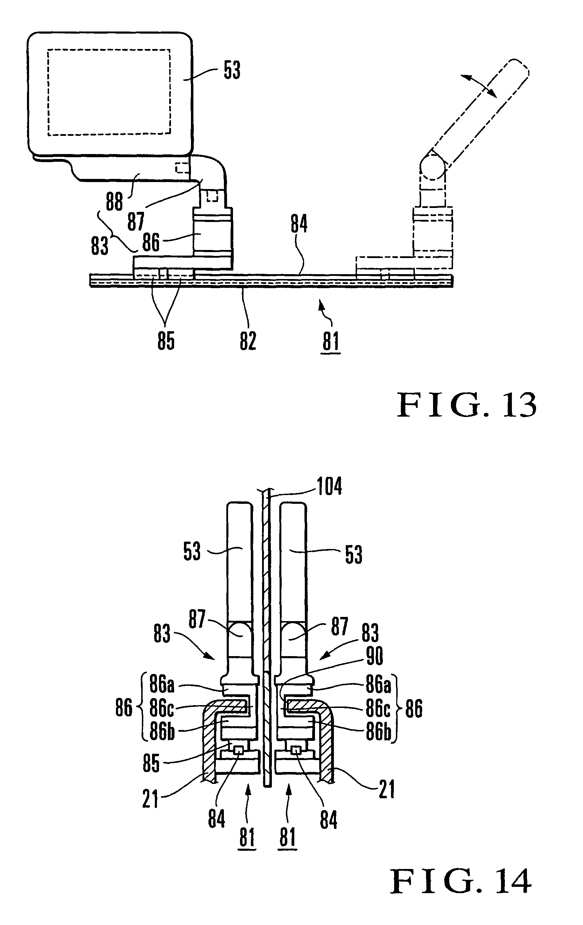

Figs. 11 to 14 show the second embodiment of the present invention, in which Fig. 11 shows a seat apparatus in which a TV monitor is stored in a console, Fig. 12 shows an armrest and console, and Figs. 13 and 14 show the TV monitor and its slide unit. Referring to Figs. 11 to 14, the storage section 54 with a width and depth large enough to store two TV monitors 53 back to back is formed in the console 50. The storage section 54 has two openings 58 which are open to the lower portion of the front surface of the console 50. Stoppers 80 are respectively provided to the openings 58 to prevent the TV monitors 53 stored in the storage section 54 from popping out when the aircraft descends or vibrates.

The TV monitors 53 are supported by slide units 81 provided in the arm cap 21 of the armrest 13. When the TV monitors 53 are not in use, they are stored in the storage sections 54 of the console 50. When the TV monitors 53 are to be used, they are drawn out upward from the arm cap 21.

The slide units 81 have linear guides 82 elongated in the back-and-forth direction and disposed in the armrest 13, and a pair of right and left TV arms 83 formed on the linear guides 82 to be slidable independently of each other. The TV monitors 53 are attached to the respective TV arms 83. Two rails 84 are arranged on the upper surfaces of the linear guides 82 parallel to each other with a predetermined distance between them in the right-to-left direction. Each TV arm 83 is comprised of an arm main body 86 having a slider 85 on its lower surface to slide along the corresponding rail 84, an elbow 87 connected to the upper surface of the arm main body 86 to be pivotal within a horizontal plane, and a horizontal support base 88 connected to the elbow 87 to be pivotal within a vertical plane. The TV monitor 53 is fixed to the upper surface of the support base 88.

The arm main body 86 has a U shape when seen from the front surface, so it is comprised of upper and lower plate portions 86a and 86b vertically facing each other, and a vertical plate portion 86c connecting the two plate portions 86a and 86b. When the TV monitor 53 is to be used, the upper plate portion 86a is drawn out forward along the upper surface of the arm cap 21. A groove 90 (Fig. 14) which enables movement of the vertical plate portion 86c is formed at the center in the widthwise direction of the arm cap 21. A partition wall 104 is formed between the right and left TV monitors 53. The partition wall 104 partitions the right and left openings 58 formed in the front surface of the front case 51, as shown in Fig. 12, and its lower end extends through the groove 90 into the arm cap 21, thereby partitioning the right and left slide units 81. When the lower end portion of the partition wall 104 extends into the groove 90 in this manner, the width of the groove 90 in each opening 58 can be decreased to substantially 1/2 to 1/3. The groove 90 is covered with a thin flexible member such as fabric or sheet (not shown), so small articles will not drop into the arm cap 21.

The TV monitor 53 is stored in the storage section 54 to be parallel to the linear guide 82 such that its screen is vertical. When the TV monitor 53 is to be used, it is drawn out from the storage section 54, and the elbow 87 and support base 88 are pivoted, so that the TV monitor 53 is adjusted at an angle and direction optimum for the seated passenger. To draw the TV monitor 53 out from the storage section 54, the passenger manually pivots the stopper 80 (Fig. 12) to open the opening 58, holds the TV monitor 53 with his hand, and draws it upward from the arm cap 21, as indicated by an alternate long and two short dashed line in Fig. 11. The seat apparatus itself is substantially the same as that of the first embodiment shown in Figs. 1 to 10.

With this structure as well, the seated passenger can take out and put back the TV monitor 53 easily in the reclining state. In the presence of the stopper 80, the stored TV monitor 53 will not pop out forward from the storage section 54 due to vibration, impact, and the like, which is safe to the passenger.

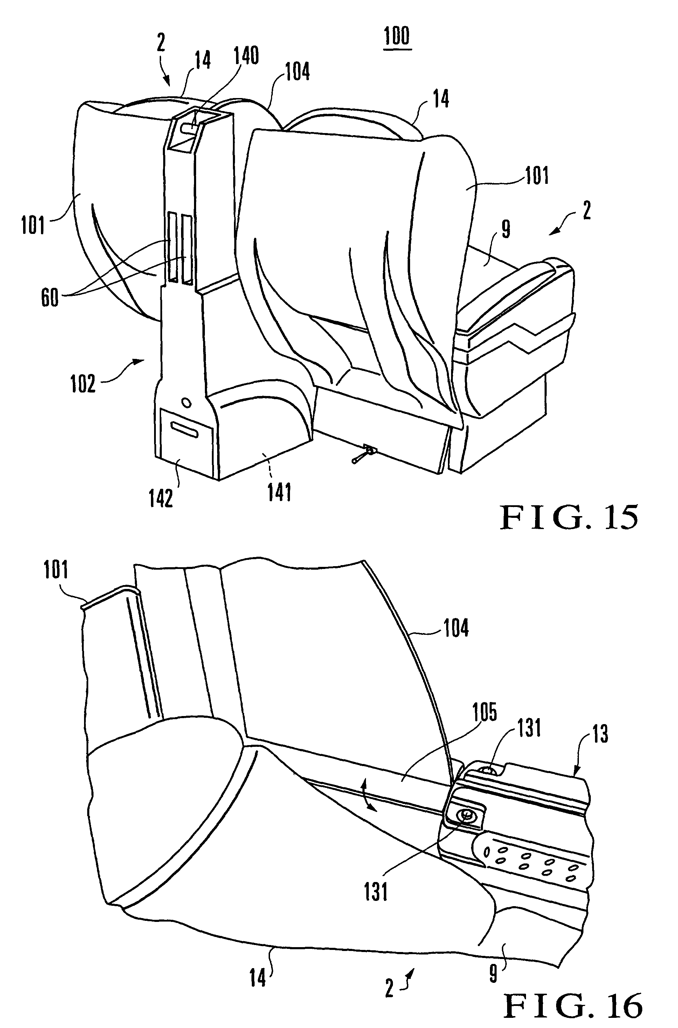

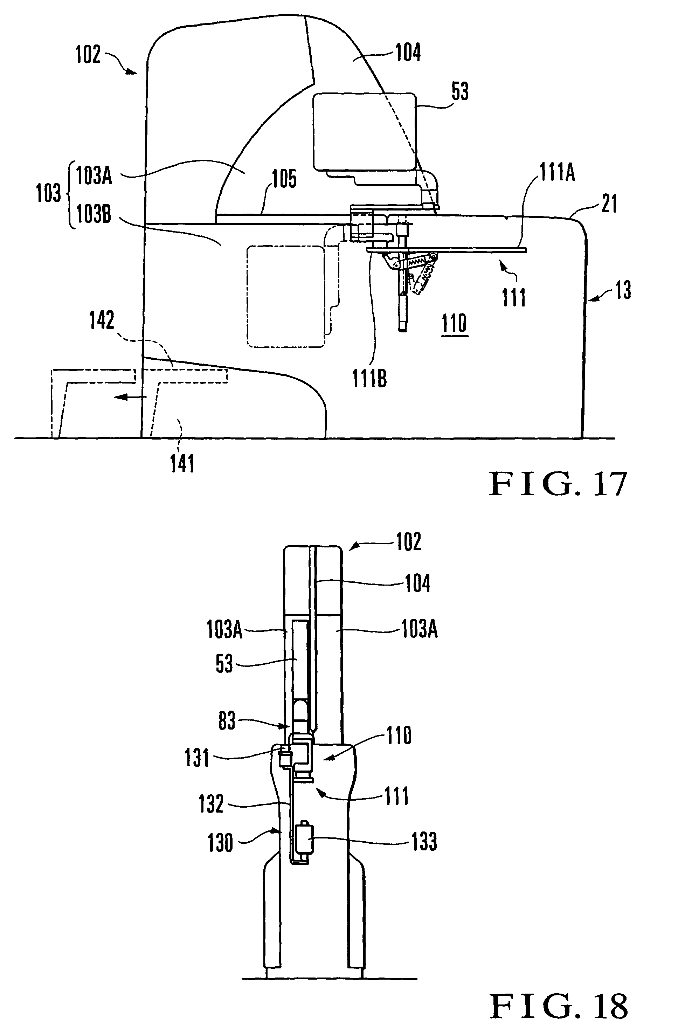

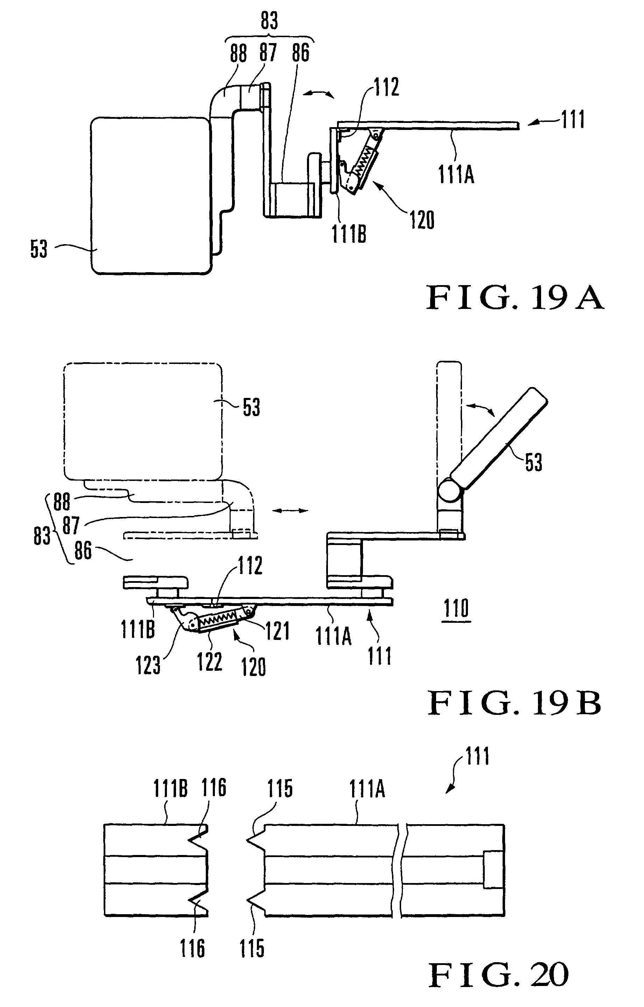

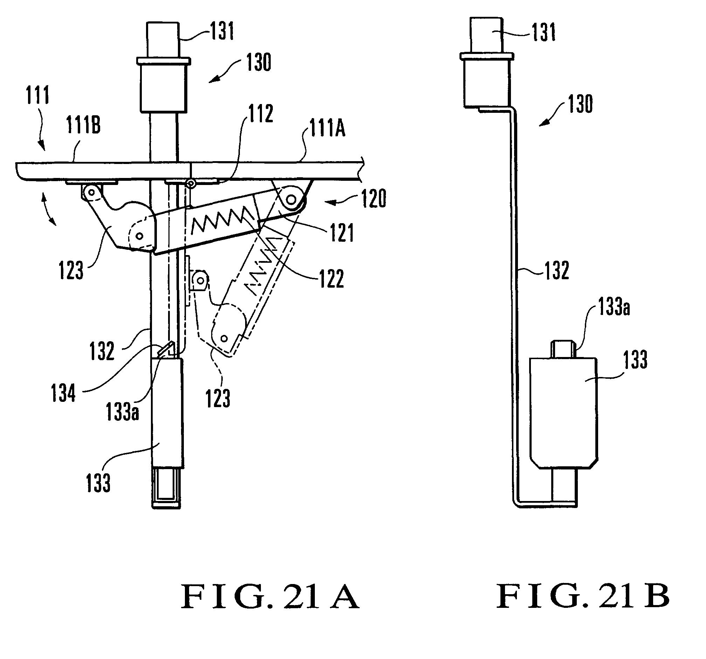

Figs. 15 to 21 show the third embodiment of the present invention, in which Fig. 15 shows a seat apparatus from the back, Fig. 16 shows the main parts of an armrest and console, Fig. 17 shows the seat apparatus, Fig. 18 shows the armrest from the front, Figs. 19A and 19B show states wherein the TV monitor is stored and in use, respectively, Fig. 20 shows the connected end portions of a slide rail, and Figs. 21A and 21B show a lock mechanism. Referring to Fig. 15 to Figs. 21A and 21B, a seat apparatus 100 is comprised of a pair of right and left seats 2, backshells 101 provided on the respective seats 2, a console 102 provided to the rear end side of the armrest 13 located between the seats 2, and the like. The seats 2 are movable back and forth with respect to the seat frames. When seat backs 14 are inclined to lie down, the seats 2 move forward together with them. The seats 2 of the third embodiment are different from the seats 2 shown in the first embodiment only in these respects. Other than that, the arrangement of the seats 2 is substantially the same as that of the first embodiment.

Each backshell 101 has a U shape when seen from above, so it surrounds the rear surface and two side portions of the seat back 14 of the seat 2. The backshell 101 has substantially the same height as that of the seat back 14 in the normal state, and is fixed to the seat frame. With this backshell 101, since the seat back 14 sinks in the backshell 101 in the reclining state, the passenger seated on this seat 2 will not be seen from the passenger seated on the rear seat, so that a private space can be assured.

The console 102 has monitor storage sections 103 in its two side surfaces on the front end portion side to store TV monitors 53. The two monitor storage sections 103 are partitioned by the partition wall 104. Each monitor storage section 103 is comprised of a portion 103A above the armrest 13 and a portion 103B below the rear portion of the armrest 13. A lid 105 is disposed at the boundary of the two portions 103A and 103B. The lid 105 is attached to the partition wall 104 with a hinge to be pivotal in the directions of arrows in Fig. 16, and usually closes the lower portion 103B of the monitor storage section 103.

The TV monitor 53 is disposed in the monitor storage section 103 such that it can be taken out and put back by a slide unit 110. When the TV monitor 53 is to be stored, it is pivoted downward through a predetermined angle (e.g., 90°) and stored in the lower portion 103B of the storage section 103.

The slide unit 110 has a linear guide 111 elongated in the back-and-forth direction of the seat apparatus 100, and the TV arm 83 slidably provided on the linear guide 111. The TV arm 83 is comprised of the arm main body 86 slidable along the linear guide 111, the elbow 87 connected to the upper surface of the arm main body 86 to be pivotal within a horizontal plane, and the horizontal support base 88 connected to the elbow 87 to be pivotal within a vertical plane. The TV monitor 53 is set on the upper surface of the support base 88. This TV arm 83 is completely the same as the TV arm 83 of the slide unit 81 of the second embodiment described above.

The linear guide 111 is divided at its rear end portion, so it is comprised of a stationary guide 111A and pivotal guide 111B. In this respect, the linear guide 111 is different from the linear guide 82 of the slide unit 81 described above. The stationary guide 111A is fixed in the armrest 13 substantially horizontally. The front end of the pivotal guide 111B is pivotally connected to the rear end of the stationary guide 111A through a hinge 112. When the TV monitor 53 is to be used (Fig. 19B), the pivotal guide 111B is horizontally held, and its front end face abuts against the rear end face of the stationary guide 111A, so it forms one linear guide 111 together with the stationary guide 111A. When the TV monitor 53 is to be stored (Fig. 19A), the pivotal guide 111B is pivoted downward through 90° so that the TV monitor 53 can be stored in the lower portion 103B through the upper portion 103A of the storage section 103. As shown in Fig. 20, engaging projections 115 and engaging recesses 116 are formed on the rear end face of the stationary guide 111A and in the front end face of the pivotal guide 111B, respectively, to engage with each other when the TV monitor 53 is in use, so that the two guides 111A and 111B are reliably connected to each other. The engaging projections 115 are formed on the rear end face of the stationary guide 111A located at an upper position. Therefore, when the TV monitor 53 is to be stored, even if it (TV arm 83, arm main body 86) moves upward on the pivotal guide 111B, it abuts against the engaging projections 115. Therefore, the TV monitor 53 (TV arm 83, arm main body 86) cannot move further upward, thereby preventing removal of the TV monitor 53.

A biasing means 120 is attached to the stationary guide 111A to connect the stationary guide 111A and pivotal guide 111B to each other. As the biasing means 120, various types of biasing means can be used. In this embodiment, a spring type buffer unit is used. More specifically, the biasing means 120 has a spring case 121 with a front end pivotally connected to the lower surface of the stationary guide 111A, a compression coil spring 122 stored in the spring case 121, and a cam plate 123 pivotally attached to the rear end side of the spring case 121. The end portion of the cam plate 123 opposite to the spring case 121 side pivotally supports the lower surface of the pivotal guide 111B. The cam plate 123 has a concave curved cam surface 124 on its proximal end portion side, and one end of the compression coil spring 122 is urged against the cam surface 124. Hence, the cam plate 123 is imparted with a counterclockwise pivoting tendency in Fig. 21A, and usually pushes the pivotal guide 111B upward with the compression coil spring 122 to hold it in the horizontal state.

Referring to Figs. 21A and 21B, a stopper mechanism 130 is provided to one end of the slide guide 111 to correspond to the biasing means 120. When the pivotal guide 111B pivots downward through almost 90° and the TV monitor 53 is stored in the lower portion 103B of the storage section 103, the stopper mechanism 130 locks the pivotal guide 111B at the pivot position. The stopper mechanism 130 is comprised of an operation button 131 exposed to the upper surface of the arm cap 21, a movable plate 132 disposed in the armrest 13 to be vertically movable and having an upper end to which the operation button 131 is attached, a return spring (not shown) for biasing the movable plate 132 upward, and a locking member 133 provided to the lower end of the movable plate 132 to lock the pivotal guide 111B at the pivot position. A locking portion 133a for locking the pivotal guide 111B at the storage position is integrally formed on the upper surface of the locking member 133 to project from it. The upper surface of the locking portion 133a forms a tilt surface 134 inclined to be low backward.

To store the TV monitor 53 in the storage section 103, first, the passenger inserts the TV monitor 53 in the upper portion 103A of the storage section 103, as indicated by a solid line in Fig. 17, opens the lid 105 with his hand and pivot it downward through almost 90°, as indicated by an alternate long and two short dashed line, and stores the TV monitor 53 in the lower portion 103B. At this time, the pivotal guide 111B pivots downward against the compression coil spring 122 of the biasing means 120. When the pivotal guide 111B pivots through almost 90° to be set in the vertical state, its lower end portion pushes the tilt surface 134 of the locking portion 133a from behind, thereby pushing down the locking member 133. Hence, the movable plate 132 also moves downward. When the lower end of the pivotal guide 111B moves forward beyond the locking portion 133a, the movable plate 132 moves upward and is returned by the force of the return spring. Hence, the locking member 133 also restores the initial height, and the locking portion 133a locks the lower end of the pivotal guide 111B, as indicated by an alternate long and two short dashed line in Fig. 21A. As a result, the TV monitor 53 is stored in the lower portion 103B of the monitor storage section 103, as indicated by an alternate long and two short dashed line in Fig. 17.

To draw out the stored TV monitor 53, the seated passenger depresses the operation button 131 with his hand to unlock the pivotal guide 111B locked by the stopper mechanism 130. More specifically, when the seated passenger depresses the operation button 131 to move the movable plate 132 downward by a predetermined amount, the locking portion 133a moves downward from the lower end of the pivotal guide 111B to unlock the pivotal guide 111B. Therefore, the pivotal guide 111B is pivoted upward by the spring force of the compression coil spring 122 to move the TV monitor 53 from the lower portion 103B to the upper portion 103A of the monitor storage section 103. At this time, the TV monitor 53 pushes the lid 105 upward to open it. When the pivotal guide 111B pivots through almost 90°, its front end abuts against the rear end of the stationary guide 111A and is held in the horizontal state. In this state, when the seated passenger pulls the TV monitor 53 forward, it is drawn out from the upper portion 103A along the slide guide 111.

On the rear surface of the console 102, a grip 140, two magazine pockets 60, and a step storage section 141 are provided downward in this order. A step 142 is drawably stored in the step storage section 141. The step 142 is used when a passenger seated on the aisle side seat tries to leave and return to his seat. This passenger draws out the step 142 as indicated by an alternate long and two short dashed line in Fig. 17 and steps on it, so that he or she, even if being a child or woman, can easily stride over the full-stretched legs of the adjacent passenger seated on the window side seat.

With this structure, the width of the seat bottom 9 is substantially increased by an amount corresponding to the width of the upper portion 103A of the monitor storage section 103. Thus, the seated passenger can have spare room and can feel comfortable, so that he can feel more at home. Since the console 102 has the partition wall 104 for partitioning the two monitor storage sections 103, the passenger seated on this seat will not see the passenger seated on the adjacent seat, and a private space can be assured for the seated passenger. Since the backshell 101 is provided to block eyes of a passenger behind him, the private space of the seated passenger can be further assured.

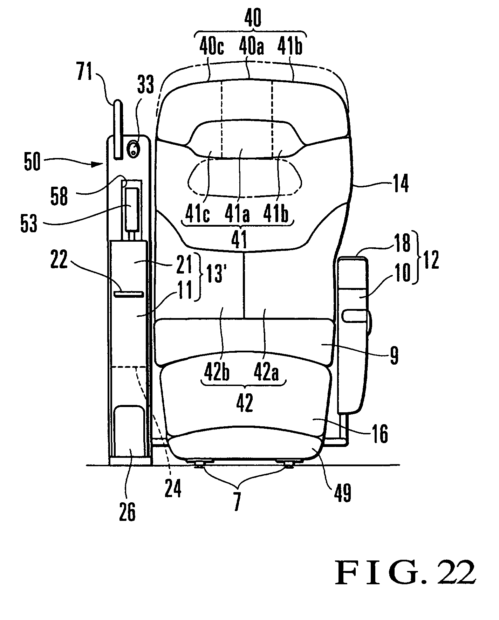

Fig. 22 shows the fourth embodiment in which the present invention is applied to a one-passenger seat for seating one passenger. Constituent members identical to those shown in Fig. 3 are denoted by the same reference numerals as in Fig. 3, and a description thereof will be omitted. In the case of a one-passenger seat, the console 50 is installed on the upper surface of the rear end portion of an aisle side armrest 13', and the TV monitor 53 is stored in the console 50 such that it can be drawn out from the front. The width of the armrest 13' is smaller than that of the armrest 13 of the multi-passenger seat. With the partition plate 71, the passenger seated on this seat will not see a passenger or clue walking the aisle, so that a private space can be assured. In this one-passenger seat as well, the same effect as that obtained in the embodiments described above can be obtained.

In the embodiments described above, the present invention is applied to a multi-passenger seat for seating two passengers and a one-passenger seat for seating one passenger. The present invention is not limited to these embodiments, and can also be applied to a multi-passenger seat for seating three passengers.

In the embodiments described above, the TV monitor 53 is drawably disposed in the console 50 or 120. The present invention is not limited to this, and other seat peripheral equipment, e.g., a display other than the TV monitor, a video deck, a telephone, a control panel, various types of operation buttons, a power source (electricity outlet), an earphone jack, a table, a reading light, and the like may be stored in the console 50 or 120.

In any of the embodiments described above, the present invention is applied to a business-class seat apparatus. The present invention can also be applied to a first- or economy-class seat apparatus.

As has been described above, the aircraft seat apparatus according to the present invention has a console, and seat peripheral equipment such as a TV monitor is drawably disposed in the console. Even when the seat apparatus is in the reclining state, the seat peripheral equipment can be taken out and put back easily, while the width of the wing of the armrest can be decreased. As a result, the width of the seat bottom increases, so that the seated passenger can have spare room and feel comfortable.

According to the present invention, a partition plate is provided to partition a space in front of adjacent seat backs. Therefore, the passenger seated on this seat apparatus will not see a passenger seated on the adjacent seat, and a private space can be assured for the seated passenger.

Furthermore, according to the present invention, the rear case of the console projects backward from the armrest, and a magazine pocket and storage section are formed in this rear case. Even if the seat pitch is large, the passenger can easily take and put magazines and personal belongings out from and back in the magazine pocket and storage section. When the rear case is removed from the armrest, the TV monitor can be attached, removed, and maintained easily.

## Claims

1. An aircraft seat apparatus comprising:
a seat (2) with an inclinable seat back (14); and
an armrest (13) with a wing provided to said seat (2),
said armrest (13) being provided with a console (50) on an upper surface on a rear end side, and
said console (50) being disposed with seat peripheral equipment (53), **characterized in that** said console (50) is comprised of a front case (51) provided to an upper surface of a rear end portion of said armrest (13), and a rear case (52) detachably attached to a rear surface of said armrest and projecting backward from said armrest,
said rear case having an interior, an upper portion of which forms a storage section for a TV monitor (53) together with said front case, and
said rear case having an interior, a lower portion of which forms a rear seat storage section (54).

2. An aircraft seat apparatus according to claim 1, wherein said rear case is provided with a magazine pocket (60).

3. An aircraft seat apparatus according to claim 1 or 2, wherein said console (102) is formed with a monitor storage section (103), at least one side surface thereof, and a partition wall (104) for constituting said monitor storage section.

## Patentansprüche

1. Flugzeugsitzvorrichtung, umfassend:
einen Sitz (2) mit einem neigbaren Sitzrücken (14); und
eine Armlehne (13) mit einem Flügel, der an dem Sitz vorgesehen ist,
wobei die Armlehne (13) an einer oberen Fläche an einer rückwärtigen Endseite mit einer Konsole (50) versehen ist und
die Konsole (50) mit Sitzperipherieausstattung (53) versehen ist, **dadurch gekennzeichnet, dass** die Konsole (50) aus einem vorderen Fach (51), das an einer oberen Fläche eines rückwärtigen Endabschnitts der Armlehne (13) vorgesehen ist, und einem rückwärtigen Fach (52), das abnehmbar an einer rückwärtigen Fläche der Armlehne befestigt ist und von der Armlehne nach hinten vorsteht, aufgebaut ist,
wobei das rückwärtige Fach einen Innenraum aufweist, dessen oberer Abschnitt zusammen mit dem vorderen Fach einen Aufbewahrungsabschnitt für einen Fernsehmonitor (53) aufweist und
das rückwärtige Fach einen Innenraum aufweist, dessen unterer Abschnitt einen rückwärtigen Sitzaufbewahrungsabschnitt (54) aufweist.

2. Flugzeugsitzvorrichtung nach Anspruch 1, wobei das rückwärtige Fach mit einer Magazintasche (60) versehen ist.

3. Flugzeugsitzvorrichtung nach Anspruch 1 oder 2, wobei die Konsole (102) mit einem Monitoraufbewahrungsabschnitt (103), mindestens einer Seitenfläche davon und einer Trennwand (104) zum Bilden des Monitoraufbewahrungsabschnitts gebildet ist.

## Revendications

1. Appareil à siège d'aéronef, comprenant :
un siège (2) ayant un dossier inclinable (14) de siège, et
un accoudoir (13) ayant une aile disposée sur le siège (2),
l'accoudoir (13) étant muni d'une console (50) à une surface supérieure du côté d'une extrémité arrière, et
la console (50) étant munie d'appareillages périphériques (53) de siège,
**caractérisé en ce que** la console (50) est constituée d'un carter avant (51) disposé à une surface supérieure de la partie d'extrémité arrière de l'accoudoir (13) et d'un carter arrière (52) fixé de façon amovible à une surface arrière de l'accoudoir et dépassant vers l'arrière depuis l'accoudoir,
le carter arrière ayant une partie intérieure dont une partie supérieure forme une section de rangement d'un moniteur de télévision (53) avec le carter avant, et
le carter arrière ayant une partie intérieure dont une partie inférieure forme une section (54) de rangement de siège arrière.

2. Appareil à siège d'aéronef selon la revendication 1, dans lequel le carter arrière est muni d'une poche (60) à revues.

3. Appareil à siège d'aéronef selon la revendication 1 ou 2, dans lequel la console (102) est formée avec une section (103) de rangement de moniteur, une surface latérale au moins de celle-ci et une cloison de séparation (104) destinée à constituer la section de rangement de moniteur.
